# EUROPEAN PATENT SPECIFICATION

(11) **EP 4 204 475 B1**
(45) Date of publication and mention of the grant of the patent: **05.06.2024**
(21) Application number: 21769128.6
(22) Date of filing: 27.08.2021
(51) Int. Cl.: C08G 63/86, C08G 63/80, C08G 63/88, B01J 23/14, C08G 63/181, C08G 63/672

(54) **PROCESS FOR PRODUCING POLYESTER COMPRISING 2,5-FURANDICARBOXYLATE UNITS**
VERFAHREN ZUR HERSTELLUNG VON POLYESTER MIT 2,5-FURANDICARBOXYLAT-EINHEITEN
PROCÉDÉ DE PRODUCTION DE POLYESTER COMPRENANT DES UNITÉS 2,5-FURANEDICARBOXYLATE

(30) Priority: 27.08.2020 EP 20193190
(43) Date of publication of application: 05.07.2023
(73) Proprietor: Furanix Technologies B.V., 1014 BV Amsterdam (NL)
(72) Inventor: DAM, Matheus Adrianus, 1014 BV AMSTERDAM (NL); WANG, Bing, 1014 BV AMSTERDAM (NL); ELFEKI, Hendawy, 1014 BV AMSTERDAM (NL)
(74) Representative: EP&C
(86) International application number: PCT/EP2021/073749
(87) International publication number: WO 2022/043500

(56) References cited:
- EP-A1- 3 119 831
- US-A1- 2017 015 781
- US-A1- 2018 265 629

## Description

The present invention relates to a process for producing a polyester comprising 2,5-furandicarboxylate units, a polyester comprising 2,5-furandicarboxylate units, a catalyst system for use in such processes and use of the respective catalyst system. Also disclosed is use of lithium hydroxide to increase the polymerization speed during solid state polymerization and/or melt state polymerization and use of an inert gas atmosphere during crystallization and/or solid state polymerization of polyesters comprising 2,5-furandicarboxylate units for enhancing the colour properties.

2,5-Furandicarboxylic acid (FDCA) is known in the art to be a highly promising building block for replacing petroleum-based monomers in the production of high performance polymers. In recent years FDCA and the plant-based polyester polyethylenefuranoate (PEF) have attracted a lot of attention. PEF is a recyclable plastic with superior performance properties compared to today's widely used plastics. These materials could significantly reduce the dependence on petroleum-based polymers and plastics, while at the same time allowing for a more sustainable management of global resources. Comprehensive research was conducted to arrive at a technology for producing FDCA and PEF in a commercially viable way.

FDCA is typically obtained by oxidation of molecules having furan moieties, e.g. 5-hydroxymethylfurfural (5-HMF) and the corresponding 5-HMF esters or 5-HMF ethers, that are typically obtained from plant-based sugars, e.g. by sugar dehydration. A broad variety of oxidation processes is known from the prior art, that comprises e.g. enzymatic or metal catalysed processes such as described in WO2010/132740 and WO2011/043660.

While a lot of research effort was directed at the efficient production of FDCA monomer in the early days of the technology, researchers soon realized that arriving at efficient processes for producing high-performance polyesters from FDCA was at least as challenging. While FDCA is oftentimes considered a structural and functional analogue to terephthalic acid (TA), that is used in the production of the widely used polyester polyethylene terephthalate (PET), it became apparent that several established techniques known from the PET industry could not be easily adapted to produce high-performance polyesters from FDCA that meet the requirements of the relevant industries. Comprehensive prior art is available on processes for producing polyesters from FDCA focussing on different aspects of the technology, e.g. EP 3116932, EP 3116934, WO 2013/1209989, US2010/0174044 and EP3119831 A1.

Several of the above-mentioned difficulties are due to the different chemical properties of the monomers TA and FDCA. One very significant aspect of this difference manifests itself with respect to the starting materials of the process for producing the respective polyesters. PET is produced on an industrial scale both from the free diacid (i.e. by esterification and polycondensation) as well as the dialkyl ester of TA (i.e. by transesterification and polycondensation) while the present process uses FDCA, i.e. the free diacid, as starting material for the esterification and subsequent polycondensation.

Compared to TA and its dialkyl esters as well as dialkyl esters of FDCA, FDCA is more susceptible to a detrimental effect called decarboxylation. Decarboxylation is a chemical reaction of carboxylic acid that removes a carboxyl group and releases carbon dioxide, yielding e.g. the mono acid furancarboxylic acid (FCA). Decarboxylation is facilitated by elevated temperatures and/or reduced pressure. Therefore, decarboxylation of FDCA was found to be particular severe during polycondensation that typically employs high temperatures. Decarboxylation is undesirable for the production of high-performance polyesters with high molecular weight, as FCA and its mono esters that are formed during esterification with diols, are chain terminators during the polycondensation, thereby reducing the maximum molecular weight of the obtainable polyester. Correspondingly, while decarboxylation is typically not a problem reported in the framework of TA/PET technology, reducing decarboxylation during a process for producing a polyester comprising 2,5-furandicarboxylate units from FDCA is highly advantageous.

The primary objective of the present invention was to provide an improved process for producing a polyester comprising 2,5-furandicarboxylate units from furandicarboxylic acid, wherein the process is capable of providing polyester comprising 2,5-furandicarboxylate units with low amounts of decarboxylated end groups and preferably high molecular weights.

In order to obtain polyester with good mechanical properties it was an objective of the present invention to provide a process that reduces the formation of ethers of aliphatic diols that could adversely affect the properties when incorporated into the produced polyester.

Due to the envisioned potential of polyester comprising 2,5-furandicarboxylate units to be a more ecologically friendly alternative to petroleum based polyesters, it can be a further objective to provide a process that can be operated using compounds that are considered more ecologically friendly compared to the prior art.

As polyesters comprising 2,5-furandicarboxylate are considered promising for several packaging applications for that the customer expects transparent materials, e.g. for bottles, it can be an additional objective of the present invention to provide a process that yields polyester with good optical properties.

Furthermore, it can be an objective to provide a process that yields polyester comprising 2,5-furandicarboxylate units that in subsequent solid state polymerization reactions can achieve high molecular weights at relatively short reaction times such as shorter than reaction times of prior art processes.

It can be a further objective to provide a polyester comprising 2,5-furandicarboxylate units with improved properties, in particular with high molecular weight and low amounts of decarboxylated end groups as well as preferably low amounts of ethers of aliphatic diols incorporated into the polyester. Thus, the respective polyester preferably exhibits favourable quantities of carboxylic acid and hydroxyl end groups such as to be suitable for further processing for example by solid state polymerization or certain reactive compounding steps.

It can also be an objective of the present invention to provide a catalyst system for use in respective processes as well as the use of said catalyst systems for reducing the extent of decarboxylation during polycondensation.

Prior art processes for producing polyesters of diacids typically comprise at least two distinct steps, i.e. the esterification and the polycondensation, wherein some processes also include additional intermediate steps like pre-polycondensation and/or subsequent processing steps like granulation, crystallization and/or solid state polymerization of the obtained resin. During esterification, diacids react with diols under esterification conditions thereby producing a mixture that - depending on the concentration of the starting materials - comprises monomeric diesters and monoesters of the diacid with the diol, e.g. hydroxyalkyl esters, as well as water, residual free diacid and low molecular oligomers of these compounds.

It is known in the art that diols, in particular aliphatic diols, can undergo ether formation with other diol molecules thereby producing higher molecular weight diols with an ether functionality. A prominent example known from the TA/PET technology is the formation of diethylene glycol (DEG) from mono ethylene glycol (MEG). These ether compounds can be incorporated into the final polyester and are known to have a detrimental effect on the physical-chemical properties of the resulting polyester. Suppressant can suppress ether formation between the diol compounds during the esterification step, wherein in TA/PET technology these compounds are oftentimes labelled DEG suppressants, indicating that they are directed at reducing the formation of DEG.

The composition obtained in the esterification step is subsequently subjected to polycondensation conditions at elevated temperature and reduced pressure in order to obtain the final polyester. The polycondensation is typically conducted in the presence of a polycondensation catalyst that usually is a metal compound.

Optionally, a pre-polycondensation step may be used between the esterification step and the polycondensation step. The pre-polycondensation step is typically conducted at a pressure lower than applied in esterification and can be used to remove the most volatile components, such as free diol and other low molecular weight compounds, before reducing the pressure even further to begin the polycondensation process.

Several suppressants and polycondensation catalysts are known from the prior art. Examples of respective compounds disclosed in the framework of PET production are described in KR20130100697.

For the present process, the combination of the suppressant and the polycondensation catalyst is to be used for the production of polyesters and is hereinafter referred to as the catalyst system. The suppressant mainly is for the esterification step and the polycondensation catalyst is for the polycondensation step, wherein the concurrent use of both compounds in both steps is optional.

Well known catalyst systems for making polyesters, including processes for PEF production, are those that comprise an antimony compound as the polycondensation catalyst and either an ammonium compound, in particular tetraethyl ammonium hydroxide, or an alkali phosphate, in particular sodium dihydrogen phosphate or disodium hydrogen phosphate, as suppressant, as disclosed e.g. in WO 2015/137807.

In an experiment described by Yosra Chebbi et al: "Solid-State Polymerization of Poly(Ethylene Furanoate) Biobased Polyester, III: Extended Study on Effect of Catalyst Type on Molecular Weight Increase", Polymers, 2019, 11, 438, germanium containing catalyst was used in polymerization of 2,5-dimethylfurandicarboxylate and ethylene glycol in a molar ratio of diester/diol of 1/2. Of the various metal based catalysts, the germanium oxide catalyst was found to result in the highest activation energy and to lead to low molecular weight PEF.

WO2015/142181, US2018/265629 and US2017/0015781 include germanium in a long list of metals which may be used as basis for a polymerization catalyst.

It now surprisingly has been found that decarboxylation in a process for producing a polyester comprising 2,5-furandicarboxylate units can be reduced by the use of a catalyst system comprising a very specific group of polycondensation catalysts in combination with a very specific group of suppressants, namely germanium compounds as polycondensation catalyst and a suppressant selected from the group consisting of amines and lithium hydroxide.

Hereinafter, the subject-matter of the invention is discussed in more detail, wherein preferred embodiments of the invention are disclosed. It is particularly preferred to combine two or more preferred embodiments to obtain an especially preferred embodiment. Correspondingly, especially preferred is a process according to the invention that defines two or more features of preferred embodiments of the present invention.

Each the process and the polyester according to the invention are described. It is a preferred embodiment that the process produces the specific and/or preferred polyesters described below in more detail.

Hereinafter, the weight average molecular weight and the number average molecular weight are determined as disclosed in the experimental section below. In summary, the weight average molecular weight and number average molecular weights are determined through the use of gel permeation chromatography (GPC) with hexafluorisopropanol with 0.05 M potassiumtrifluoroacetate as eluent and calibrated using polymethylmethacrylate standard.

The present process for producing a polyester comprising 2,5-furandicarboxylate units comprises: a) providing or producing a starting composition comprising 2,5-furandicarboxylic acid, an aliphatic diol and a suppressant for suppressing ether formation between the aliphatic diol molecules, b) subjecting the starting composition to esterification conditions to produce an ester composition, preferably comprising the suppressant, and c) contacting the ester composition with a germanium containing catalyst at polycondensation conditions to produce a polyester comprising 2,5-furandicarboxylate units, wherein the suppressant is selected from the group consisting of amines and lithium hydroxide.

The starting composition can be produced or provided, e.g. bought from a separate supplier. The starting composition comprises 2,5-furandicarboxylic acid, i.e. free diacid. Those processes that start from the dialkyl esters of FDCA are less prone to decarboxylation. Decarboxylation of FDCA yields 2-furancarboxylic acid which functions as a chain terminator in polycondensation and limits the maximum obtainable molecular weight of the polyester. Therefore, it is especially preferred to carefully limit the concentration of 2-furancarboxylic acid in the starting composition. The starting composition preferably comprises 500 ppm or less of 2-furancarboxylic acid, preferably 400 ppm or less, more preferably 300 ppm or less, by weight with respect to the weight of the starting composition.

The starting composition further comprises an aliphatic diol. The present process is very flexible with respect to the type of aliphatic diol used, without limiting its beneficial effect on the decarboxylation.

The starting composition also comprises a suppressant for suppressing ether formation between the aliphatic diol molecules. The effect of ether formation is known for a broad variety of aliphatic diols, wherein a suppressant that is a capable of reducing the ether formation for a given diol can safely be assumed to at least reduce the amount of ether formation for other diols as well. In particular, the problem of ether formation was found to be more severe for reactions that employ FDCA as a starting material compared to TA.

The starting composition prepared in step a) is subjected to esterification conditions to produce an ester composition comprising the suppressant. The esterification of a diol compound with an acid compound is a reaction that is well known to the skilled person and that is typically conducted at elevated temperatures. Based on the molar ratio of the starting materials used in the starting composition, the chemical constitution of the ester composition can vary. However, for the molar ratios typically employed, the ester composition tend to comprise the mono ester of the diacid and the diol compound, the diester of the diacid and the diol, a minor amount of unreacted FDCA and low molecular oligomers of the respective compounds as well as potentially unreacted aliphatic diol compound.

The ester composition at the end of the esterification typically comprises the suppressant and/or its reaction products and/or its decomposition products, respectively, depending on the suppressant and the reaction conditions. To achieve the desired effect suppressing ether formation during the process of the present invention, the suppressant is to be present during the esterification and will therefore be also comprised in the ester composition, either as the suppressant and/or its reaction products and/or its decomposition products. However, for some embodiments it might be expedient to remove the suppressant and/or its reaction products and/or its decomposition products after step b) but prior to polycondensation. However, it is preferred that the suppressant and/or its reaction products and/or its decomposition products is present during the polycondensation as well. In fact, the catalyst system of the present invention is specifically chosen to allow the presence of the polycondensation catalyst, i.e. the germanium compound, during esterification and of the suppressant, i.e. an amine or lithium hydroxide, to be present in both steps.

The ester composition obtained in step b) is contacted with a germanium containing catalyst at polycondensation conditions, wherein other intermediate steps can be conducted in between step b) and step c), e.g. a pre-polycondensation step as described above. This polycondensation is used for producing a polyester comprising 2,5-furandicarboxylate units by forming additional ester moieties between the compounds of the ester composition by means of esterification and transesterification, wherein e.g. water and/or aliphatic diol are released in the condensation process, and are typically removed from the reaction due to the elevated temperatures and reduced pressures used during polycondensation.

Both the esterification reaction and the polycondensation may be conducted in one or more steps and could suitably be operated as either batch, semi-continuous or continuous processes. It is preferred that the esterification process is conducted until the esterification reaction has progressed to the point where 80 % or more, preferably 85 % or more, most preferably 90 % or more, of the acid groups have been converted to ester moieties before the polycondensation is started.

The polycondensation is conducted in the presence of a germanium containing catalyst. Many different germanium containing compounds are suitable as germanium containing catalyst.

In the process of the present invention the suppressant is to be selected from the group consisting of amines and lithium hydroxide. Therein, the inventors found that in principle all amines, e.g. primary amines, secondary amines or tertiary amines can be used for the process of the present invention.

The skilled person understands that the amount of suppressant and polycondensation catalyst may vary within the typical ranges known for catalyst systems and is mostly dependant on the type of compound that is used as well as the amount of FDCA that is employed in the starting material. Therefore, the skilled person can readily determine suitable amounts of these compounds for his specific purposes.

The process of the present invention can overcome disadvantages of the prior art processes and provides a process for producing a polyester comprising 2,5-furandicarboxylate units from 2,5-furandicarboxylic acid, wherein decarboxylation can be reduced and wherein the process can provide polyester comprising 2,5-furandicarboxylate units with high molecular weights, good processability in subsequent solid state polymerizations, i.e. that exhibit a good increase in molecular weight during solid state polymerization, and low amounts of decarboxylated end groups. Therein, the formation of ethers of aliphatic diols that adversely affect the properties of the produced polyesters is reduced. Furthermore, with the process of the present invention polyesters can be obtained that exhibit excellent optical properties.

As a beneficial effect, the process of the present invention uses compounds that are considered more ecologically friendly compared in particular to the antimony compounds used in the processes of the prior art.

Preferred is a process according to the invention, wherein the aliphatic diol comprises 2 to 8 carbon atoms, preferably 2 to 6 carbon atoms, wherein the aliphatic diol preferably solely has carbon atoms in the main chain. Preferably, the aliphatic diol comprises no C-O-C connectivity.

Relatively short and mostly linear diols are thought to exhibit a particular strong tendency for ether formation under conditions typically employed for esterification. Some aliphatic diols themselves already contain an ether group, i.e. a C-O-C connectivity in the main chain. For example, DEG is a diol with an internal ether group. While such compounds are sometimes used in the prior art intentionally, the use of respective diols was typically found to give polyesters having less favourable physical-chemical properties. While reducing the formation of even longer oligomers, e.g. by ether formation between two diethylene glycol molecule, will still be beneficial, it is naturally most preferred to avoid the respective diols with ether functionality all together.

Furthermore, alkylene glycols are typically readily available in large amounts while at the same time easy to handle and to process. At the same time, the resulting polyesters haven proven to exhibit excellent mechanical properties, in particular if ethylene glycol and/or or butylene glycol is used.

Therefore, a process according to the invention is preferred, wherein the polyester comprising 2,5-furandicarboxylate units is a polyalkylenefuranoate, preferably selected from the group consisting of poly(ethylene 2,5-furandicarboxylate), polypropylene 2,5-furandicarboxylate), poly(butylene 2,5-furandicarboxylate), poly(pentylene 2,5-furandicarboxylate) and copolymers thereof, more preferably from the group consisting of poly(ethylene 2,5-furandicarboxylate) and poly(butylene 2,5-furandicarboxylate), most preferably is poly(ethylene 2,5-furandicarboxylate).

Despite the above described advantages of aliphatic diols without internal ether groups, it can be expedient for certain applications to use diols that have an ether moiety. This is particular true for hetero alicyclic compounds, wherein for example isosorbide is known to result in polyesters with promising properties for specific and use applications.

In view of this, a process according to the invention is preferred, wherein the aliphatic diol is selected from the group consisting of acyclic diols and alicyclic diols, preferably selected from the group consisting of alkylene glycols and alicyclic diols, more preferably from the group consisting of alkylene glycols, cyclohexanedimethanol and isosorbide, most preferably alkylene glycols, particular preferred ethylene glycol.

It was discussed in the prior art that the molar ratio of the aliphatic diol to the FDCA can influence the molecular weight obtainable by such a process, and also the velocity of the increase of molecular weight during a subsequent solid state polymerisation. For the specific processes of the present invention that are employing a germanium compound and the specific suppressant, the inventors identified molar ratios that were found to be particular beneficial.

Therefore, preferred is a process according to the invention, wherein the molar ratio of the aliphatic diol to 2,5-furandicarboxylic acid of the starting composition is in the range of 1.01 to 1.80, preferably 1.05 to 1.70, more preferably 1.07 to 1.60, most preferably 1.10 to 1.30. Preferably, the ester composition comprises 2,5-furandicarboxylic acid mono-hydroxyalkyl ester of 2,5-furandicarboxylic acid and di-hydroxyalkyl ester of 2,5-furandicarboxylic acid, wherein the total ratio of hydroxyl end groups measured by ¹H-NMR to carboxylic acid end groups measured by titration is in the range of 1.01 to 4.6, preferably 1.05 to 2.00, more preferably 1.07 to 1.80, most preferably 1.10 to 1.30, wherein the amount of hydroxyl end groups measured by ¹H-NMR is preferably in the range of 300 to 2400 eq/t, more preferably 500 to 2000 eq/t, most preferably in the range of 600 to 1800 eq/t, and wherein the amount of carboxylic end groups measured by titration is preferably in the range of 300 to 1200 eq/t, more preferably 500 to 1000 eq/t, most preferably in the range of 600 to 900 eq/t. Preferably, 2,5-furandicarboxylic acid and aliphatic diols constitute 90 % or more, preferably 95 % or more, most preferably 98 % or more, of the starting composition that is subjected to esterification by weight with respect to the weight of the starting composition.

Preferably, the polyester produced by the present process consists of poly(ethylene 2,5-furandicaboxylate).

As indicated above, optimized conditions for conducting both the esterification and the polycondensation were identified in order to find the best process parameters for the combination with the specific polycondensation catalyst and the specific suppressant of the process of the present invention, in order to further minimize decarboxylation while optimizing yield and quality of the obtainable polyester.

It was found the esterification of the present process preferably is conducted at a temperature in the range of 180 to 260 °C, preferably 185 to 240 °C, more preferably 190 to 230 °C. The polycondensation preferably is conducted at a temperature in the range of 240 to 300 °C, preferably 260 to 290 °C, more preferably 265 to 285 °C. Preferably, the esterification is conducted at a pressure in the range of 40 to 400 kPa, preferably 50 to 150 kPa, more preferably 60 to 110 kPa. Preferably, the polycondensation is conducted at reduced pressure in the range of 0.05 to 100 kPa, preferably 0.05 to 10 kPa, more preferably 0.1 to 1 kPa.

The above described preferred process parameters are in particular applicable to those processes, wherein the 2,5-furandicarboxylic acid and the aliphatic diol constitute 90 % or more, preferably 95 % or more, most preferably 98 % or more of the starting composition by weight.

While the actual reaction time depends on the employed starting materials and their amounts, the esterification is typically conducted for a time t in the range of 30 to 480 min, preferably 60 to 360 min, more preferably 120 to 300 min, most preferably 180 to 240 min, while the polycondensation is typically conducted for a time t in the range of 10 to 260 min, preferably 30 to 190 min, more preferably 60 to 120 min.

As indicated above, a process according to the invention is preferred, wherein the esterification is conducted in the presence of the germanium compound.

The above process is particular preferred, because the catalyst system can conveniently be applied to the starting composition together, i.e. the polycondensation catalyst and the suppressant can both be added at the same time removing the need for additional process step that would be required if the polycondensation catalyst would have to be added afterwards. This beneficial effect of the process of the present invention is possible as a germanium compound is used as the polycondensation catalyst, while other polycondensation catalysts were found to deactivate if present during the esterification. The possibility of adding the polycondensation catalyst during esterification brings further benefits, in particular if germanium compounds with a comparable low solubility are used, as the available time for fully solubilizing the catalyst before polycondensation is increased.

The germanium can be present in the catalyst system as the metal or as the cation. Preferred is a process according to the invention, wherein the germanium containing catalyst is selected from the group consisting of germanium oxide and germanium salts, preferably selected from the group of organic germanium salts and germanium oxide. In the present context, an organic germanium salt comprises a salt of a germanium cation and at least one kind of hydrocarbon anion. Most preferably, the germanium containing catalyst consists of germanium oxide.

The suppressant preferably is selected from the group consisting of primary amines, secondary amines, tertiary amines and lithium hydroxide, preferably selected from the group consisting of primary amines, tertiary amines and lithium hydroxide, more preferably selected from the group consisting of 2-(diethylamino)ethanol (Et₂NEtOH), N,N-dimethyldodecylamine (Me₂NDodec), 3-aminocrotonic acid ester with butanediol (ACAEBD) and lithium hydroxide, most preferably selected from the group consisting of 2-(diethylamino)ethanol and N,N-dimethyldodecylamine. As discussed below, it can be preferred that the suppressant is lithium hydroxide.

As indicated above, the process of the present invention can be flexible with respect to the type of germanium containing catalyst as well as suppressant that is chosen, as long as the suppressant is an amine and/or lithium hydroxide. However, specific compounds were found to exhibit particular excellent performance and low decarboxylation in the process of the present invention. With respect to the germanium containing catalyst germanium oxide is preferred due to its performance and its resilience to the process parameters typically employed during esterification and/or polycondensation. Among the potential suppressants, good reduction of the decarboxylation was in particular found for primary amines, tertiary amines and lithium hydroxide, wherein 3-aminocrotonic acid ester with butanediol (ACAEBD), Et₂NEtOH and Me₂NDodec were identified as particular suitable amines. These three amines were chosen intentionally to probe the suitability of a broad group of amines despite the effort required for each experimental run. Likewise, the degree of steric hindrance is varied by also working with ACAEBD which is a larger bifunctional amine.

It can be preferred to use primary amines, secondary amines and/or tertiary amines as suppressant especially if good optical properties are desired. In these cases, especially good results were obtained with primary amines, in particular Et₂NEtOH and Me₂NDodec.

As indicated above, the concentration ranges for the polycondensation catalyst and/or the suppressant can be chosen by the skilled person for his specific process. However, the inventors identified optimized concentration ranges for the germanium containing catalyst and the suppressant that are particularly suitable if the starting composition comprises 90 % or more, preferably 95 % or more, most preferably 98 % or more, by weight of FDCA and aliphatic diol.

Therefore, preferred is a process according to the invention, wherein the concentration of the germanium containing catalyst in step c), calculated as the metal per se, preferably is in the range of 10 to 1000 ppm, preferably 30 to 500 ppm, more preferably 50 to 300 ppm, most preferably 70 to 150 ppm, by weight with respect of the weight of the starting composition. Preferably, the amount of the germanium containing catalyst in step c) is in the range of 0.005 to 0.1 %, preferably 0.005 to 0.05 %, more preferably 0.01 to 0.04 %, by weight with respect to the weight of 2,5-furandicarboxylic acid in the starting composition. Preferably, the molar ratio of the germanium containing catalyst to FDCA in the starting composition is in the range of 0.0001 to 0.01, preferably 0.0002 to 0.001.

Preferably, the concentration of the suppressant in the starting composition is in the range of 5 to 1300 ppm, preferably 20 to 700 ppm, more preferably 30 to 450 ppm, by weight with respect of the weight of the starting composition, wherein preferably the concentration of amines in the starting composition is in the range of 60 to 400 ppm, preferably 80 to 350 ppm, more preferably 120 to 300 ppm, by weight with respect of the weight of the starting composition, and/or the concentration of lithium hydroxide in the starting composition is in the range of 5 to 200 ppm, preferably 10 to 100 ppm, more preferably 20 to 60 ppm, by weight with respect of the weight of the starting composition. Preferably, the concentration of the suppressant in the starting composition is less than 0.1 mol%, preferably less than 0.05 mol%, preferably less than 0.03 mol%, with respect to the amount of 2,5-furandicarboxylic acid in the starting composition. Preferably, the molar ratio of the suppressant to FDCA in the starting composition is in the range of 0.0001 to 0.001, preferably 0.00015 to 0.0004.

More specifically, it is preferred that the concentration of 2-(diethylamino)ethanol (Et₂NEtOH) in the starting composition is in the range of 5 to 670 ppm, preferably 30 to 340 ppm, more preferably 60 to 200 ppm, by weight with respect of the weight of the starting composition, and/or wherein the concentration of N,N-dimethyldodecylamine (Me₂NDodec) and/or 3-aminocrotonic acid ester with butanediol in the starting composition is in the range of 5 to 1300 ppm, preferably 60 to 700 ppm, more preferably 120 to 450 ppm, by weight with respect of the weight of the starting composition.

Although other polycondensation catalysts or other suppressants can be used or added, the exclusive use of germanium containing compounds as polycondensation catalyst and of amines and/or lithium hydroxide as suppressant is preferred. Therefore, a process according to the invention is preferred, wherein the polycondensation catalyst consists of germanium compounds and the suppressant consists of suppressants that are selected from the group consisting of amines and lithium hydroxide. Preferably, the concentration of antimony compounds in the starting composition is in the range of 0 to 50 ppm, preferably 0 to 20 ppm, more preferably less than 5 ppm by weight with respect of the weight of the starting composition. The combined concentration of ammonium compounds and sodium in the starting composition preferably is in the range of 0 to 50 ppm, preferably 0 to 20 ppm, more preferably less than 5 ppm by weight with respect of the weight of the starting composition.

Preferred is a process according to the invention, wherein the amount of decarboxylated end groups in the polyester comprising 2,5-furandicarboxylate units after polycondensation determined by ¹H-NMR using TCE-d2 is less than 7 eq/t, preferably less than 6 eq/t, most preferably less than 5 eq/t. Full details on the measurement are given below.

Preferably, the amount of ethers of aliphatic diol incorporated in the polyester comprising 2,5-furandicarboxylate units, after polycondensation is less than 3 %, preferably less than 2.5 %, by weight with respect to the weight of the polyalkylenefuranoate determined by ¹H-NMR using TCE-d2. Full details on the measurement are given below.

It is preferred that high performance polyester has less than 7 eq/t, i.e. 7 equivalents per metric ton, corresponding to mol/t, of decarboxylated end groups. Likewise, it is preferred that the amount of ethers of aliphatic diol that get incorporated in the polyester is less than the values indicated above.

The skilled person is well aware of suitable methods for determining the end groups in polyesters, including titration, infrared and proton-nuclear magnetic resonance (¹H-NMR) methods. In many cases, separate methods are used to quantify the four main end groups, i.e. carboxylic acid end groups, hydroxyl end groups, ester end groups and the end groups that are obtained after decarboxylation. A.T Jackson and D.F. Robertson have published an 1H-NMR method for end group determination in PET in "Molecular Characterization and Analysis of Polymers" (J.M. Chalmers en R.J. Meier (eds.), Vol. 53 of "Comprehensive Analytical Chemistry", by B. Barcelo (ed.), (2008) Elsevier, on pages 183-193. A similar method can be carried out for polyesters that comprise 2,5-furandicarboxylate units. Herein, the measurement of the end groups can be performed at room temperature without an undue risk of precipitation of the polyester from the solution. This ¹H-NMR method using deuterated 1,1,2,2-tetrachloroethane (TCE-d2) is very suitable to determine the amount of decarboxylation end groups (DEC) and can also be used to determine the content of ethers of aliphatic diol incorporated in the polyester. Peak assignments are set using the TCE peak at a chemical shift of 6.04 ppm. The furan peak at a chemical shift of 7.28 ppm is integrated and the integral is set at 2.000 representing the two protons on the furan ring. The decarboxylated end groups are found at a chemical shift of 7.64 - 7.67 ppm, representing one proton. The content of DEG is determined from the integral of the respective shift of the protons adjacent to the ether functionality, e.g. shifts at 3.82 to 3.92 ppm for DEG, representing four protons. The amount of hydroxyl end groups (HEG) is determined from the two methylene protons of the hydroxyl end group at 4.0 ppm. In the framework of the present invention, the above described methods are used to determine DEC, the content of DEG and other ethers as well as HEG, while the amount of carboxylic acid end groups (CEG) is determined using titration as disclosed in the experimental section below. The shifts for DEG are exemplary for the use of monoethylene glycol as diol. Corresponding shifts can be readily determined for other ethers produced from other diols by one skilled in the art. The shifts mentioned for decarboxylation are relatively insensitive to the choice of diol, as is the acid titration method for determining CEG.

Preferred is a process according to the invention, wherein the polyester comprising 2,5-furandicarboxylate units after polycondensation has a number average molecular weight of 20 kg/mol or more, preferably 25 kg/mol or more, preferably 30 kg/mol or more.

While the polyester obtained after polycondensation can be used directly for specific applications, it is in some cases beneficial to add further processing steps. These steps can comprise a step of crystallizing the polyester for obtaining a crystallized polyester and subjecting the crystallized polyester to a solid-state polymerization for increasing the molecular weight. Therefore, it can be preferred that the process further comprises the steps: d) crystallizing the polyester comprising 2,5-furandicarboxylate units obtained in step c) to obtain a crystallized or semi-crystallized polyester comprising 2,5-furandicarboxylate units, and e) subjecting the crystallized polyester comprising 2,5-furandicarboxylate units produced in step d) to a solid state polymerization for increasing the molecular weight.

The general concenpt of both steps are known from the TA/PET technology. However, the inventors identified specific process parameters that were found to be particularly beneficial for the process of the present invention, i.e. employing a specific polycondensation catalyst and a specific suppressant, in particular if both of these compounds are still present in the crystallized polyester as will typically be the case.

Insofar, a process according to the invention is preferred, wherein the solid state polymerization is conducted at an elevated temperature in the range of Tm - 80 °C to Tm - 20 °C, preferably Tm - 60 °C to Tm - 25 °C, more preferably Tm - 60 °C to Tm - 30 °C, wherein Tm is the melting point of the polyester comprising 2,5-furandicarboxylate units in °C, wherein the solid state polymerization is preferably conducted at an elevated temperature in the range of 160 to 240 °C, more preferably 170 to 220 °C, most preferably 180 to 210 °C. The melting point of a polymer is easily determined by DSC and measured at the top of the endothermic peak. The ISO11357-3 standard describes such a melting determination. The crystallization preferably is conducted at an elevated temperature in the range of 100 to 200 °C, preferably 120 to 180 °C, more preferably 140 to 160 °C. The crystallization preferably is conducted for a time t in the range of 0.5 to 48 h, preferably 1 to 6 h, wherein step d) is conducted directly after step c) without cooling the polyester comprising 2,5-furandicarboxylate units below 50 °C. The crystallization preferably is conducted at or near ambient pressure or, less preferred, at reduced pressure of less than 100 kPa or less than 10 kPa. The solid state polymerization preferably is conducted under inert gas atmosphere, preferably nitrogen, helium, neon or argon atmosphere.

It is preferred that the crystallized or semi-crystallized polyester obtained in step d) is granulated to obtain a degree of granulation in the range of 20 to 180 pellets per g, preferably 40 to 140 pellets per g.

The optimal time for the crystallization can be chosen based on the crystallization enthalpy dHcryst of the polyester. When the polyester obtained in step c) is heated to yield a semi-crystallized or crystallized polyester, the amount of decarboxylated end groups does not alter. However, the crystallinity changes significantly. This may be determined by means of Differential Scanning Calorimetry (DSC). The crystallinity is often measured as the enthalpy for melting the semi-crystalline polymer when heating at a suitable rate. The crystallinity is expressed in the unit J/g, and is taken as the net enthalpy of the melting peak (endotherm) after correcting for any crystallization (exotherm) which occurs on the upheat. A process according to the invention is preferred, wherein the crystallization is conducted for a time t so that the net enthalpy dHcryst of the polyester comprising 2,5-furandicarboxylate is larger than 20 J/g, preferably larger than 25 J/g, more preferably larger than 30 J/g as measured via DSC using a heating rate of 10 dC/min.

Solid-state polymerization can lead to a significant increase in the number average and weight average molecular weight of the obtained polyester. However, optical properties can be adversely affected by the steps of crystallization and solid-state polymerization.

It now has been found that the optical properties can be enhanced if not only the solid-state polymerization is conducted in an atmosphere with reduced oxygen concentration, preferably under an inert gas atmosphere, but also the crystallization step itself. It was found that by employing this strategy the optical properties could be improved by a factor of about 2.5 to 4. An atmosphere with reduced oxygen concentration means a reduction compared to air at ambient pressure, preferably an oxygen partial pressure of less than 1 kPa, more preferably less than 0.1 kPa, most preferably less than 0.01 kPa, even more preferably less than 0.001 kPa.

It is preferred to conduct crystallization of the present process in an atmosphere with reduced oxygen concentration, preferably under inert gas atmosphere, preferably nitrogen, helium, neon or argon atmosphere, most preferably nitrogen atmosphere. It was found possible to produce polyester comprising 2,5-furandicarboxylate units after solid state polymerization has a light absorbance of 0.06 or less, preferably 0.04 or less, more preferably 0.02 or less, measured as a 30 mg/mL solution in a dichloromethane:hexafluoroisopropanol 8:2 (vol/vol) mixture at 400 nm, employing an optical path length of 2.5 cm.

It was surprisingly found that the rate of molecular weight increase during solid-state polymerization can be significantly increased if lithium hydroxide is used as a suppressant. Polyesters with very high molecular weights can be obtained in very short time period of solid-state polymerization. This allows to significantly increase the output of a process.

It has become possible to prepare polyester comprising 2,5-furandicarboxylate units having a number average molecular weight of 30 kg/mol or more, preferably 45 kg/mol or more, more preferably 60 kg/mol or more. The polyester comprising 2,5-furandicarboxylate units can have a weight average molecular weight of 90 kg/mol or more, preferably 100 kg/mol or more, more preferably 180 kg/mol or more.

It was further found that the process allows the addition of typical stabilizers that are known from the prior art. Therefore, the process starting composition can further comprise a stabilizer. Stabilizers include phosphorous containing compounds, in particular phosphite containing compounds, phosphate containing compounds and phosphonate containing compounds, preferably phosphoric acid, and hindered phenolic compounds.

The present invention also relates to a catalyst system for use in a process according to the invention, comprising a germanium compound, preferably germanium oxide, as a polycondensation catalyst and one or more suppressants, selected from the group consisting of Et₂NEtOH, Me₂NDodec, 3-aminocrotonic acid ester with butanediol (ACAEBD) and lithium hydroxide. It furthermore relates to the use of such a catalyst system according to the invention for reducing decarboxylation during esterification and polycondensation of a polyester comprising 2,5-furandicarboxylate units from 2,5-furandicarboxylic acid and an aliphatic diol, preferably in a process according to the invention.

The invention additionally relates to a polyester comprising 2,5-furandicarboxylate units, preferably a polyalkylenefuranoate, having a weight average molecular weight after polycondensation of 40 kg/mol or more, preferably 45 kg/mol or more, more preferably 60 kg/mol or more, wherein the amount of decarboxylated end groups in the polyester determined by ¹H-NMR is less than 7 eq/t, preferably less than 6 eq/t, most preferably less than 5 eq/t, wherein the polyester comprising 2,5-furandicarboxylate units preferably comprises less than 5 ppm by weight of antimony compounds and less than 5 ppm by weight of ammonium compounds, wherein the polyester comprising 2,5-furandicarboxylate units most preferably is produced by a process according to the invention.

The use of lithium hydroxide during esterification and/or polycondensation as an additive was surprisingly found to increase average molecular weight gained per time during subsequent solid state polymerization and/or melt state polymerization of polyester comprising 2,5-furandicarboxylate units.

The use of an inert gas atmosphere during crystallization of polyesters comprising 2,5-furandicarboxylate units with a weight average molecular weight of 40 kg/mol or more was surprisingly found to enhance the colour properties and/or reduce the light absorbance at 400 nm.

The invention will be further illustrated by means of the following examples.

### Examples

### Abbreviations and Measurements:

DEC denotes the equivalents of decarboxylated end groups per metric ton of the obtained polymer in eq/t, cDEG indicates the amount of diethylene glycol incorporated in the polyester in weight percent with respect to the weight of the polyester. Herein, the values for the decarboxylated end groups (DEC), the amount of hydroxyl end groups and the amount of diethylene glycol in the polyester, were obtained by ¹H-NMR using TCE-d2 as described above.

In a typical experiment about 10 mg of a polyester was weighed and put in an 8 ml glass vial. To the vial 0.7 ml of TCE-d2 was added and the polyester was dissolved at room temperature whilst agitating the mixture in the vial. The dissolved mixture was analyzed using ¹H-NMR, whilst the peak for TCE-d2 was set to 6.04 ppm.

A_400 is the absorbance of a 30 mg/mL solution of polyester in a dichloromethane:hexafluoroisopropanol 8:2 (vol/vol) mixture in a 2.5 cm diameter circular vial measured at 400 nm. The data measured for the 2.5 cm diameter vial can be converted to a customary 1 cm equivalent path length by dividing the measured data by 2.5.

The amount of carboxylic end groups (CEG) in eq/t was measured by titration based on ASTM D7409, i.e. by titration of a solution of 0.4 to 1.2 g of the polymer sample dissolved in 50 mL of o-cresol with 0.01 M solution of potassium hydroxide in ethanol to its equivalence point using bromocresol green as indicator.

The weight average molecular weight and the number average molecular weight are determined through the use of gel permeation chromatography (GPC). GPC measurement was performed at 35 °C using two PSS PFG linear M (7 µm, 8x300 mm) columns with precolumn. Hexafluorisopropanol with 0.05 M potassiumtrifluoroacetate was used as eluent. Flow rate was set to 1.0 mL/min, injection volume was 50 µL and the run time was 50 min. The calibration is performed using polymethylmethacrylate standards.

In the experiments, concentrations in ppm are given with respect to the theoretical maximum weight of the polymer obtainable from the respective starting composition, that is calculated by multiplying the mols of FDCA in the starting composition with the molecular weight of the corresponding theoretical polymer repeat unit (i.e. FDCA + aliphatic diol - 2*H₂O).

The FDCA used in the experiments comprised less than 500 ppm FCA.

### Experiment A:

A starting composition comprising ethylene glycol and 2,5-furandicarboxylic acid in a molar ratio of 1.13, with suppressant in an amount as indicated in Table 1 was subjected for 20 min to a temperature of 200 °C and at atmospheric pressure and subsequently for 180 min to a temperature of 220 °C and at atmospheric pressure. In the obtained ester composition, the hydroxyl end groups were measured by ¹H-NMR and was determined to be 1544 eq/t. The carboxylic acid end groups were measured by titration and were found to be 984 eq/t. After esterification the Sb polycondensation catalyst was added as metal oxide in 0.65 ml ethylene glycol. Polycondensation was conducted for 75 min at 260°C. The type and amount of polycondensation catalyst are indicated in Table 1 and the results obtained for the polymer after melt polymerization, i.e. polycondensation, are listed in Table 2.

**Table 1**

| | Catalyst | Catalyst (ppm metal) | Suppressant | Suppressant (ppm) |
|---|---|---|---|---|
| Comp 1 | Sb | 270 | TEACH | 210 |

**Table 2**

| | DEC (eq/t) | CEG (eq/t) | HEG (eq/t) | cDEG (wt%) | A_400 (a.u.) | Mₙ (kg/mol) | M_{w} (kg/mol) |
|---|---|---|---|---|---|---|---|
| Comp 1 | 12 | 60 | 52 | 1.9 | 0.018 | 28.7 | 65.6 |

The experimental data presented above shows that with prior art processes polymers can be obtained that comprise low amounts of diethylene glycol as well as good optical properties as indicated by the A_400 value that should be as low as possible. However, it can be seen that the comparative experiment Comp 1, that closely resembles the prior art using an antimony catalyst and tetraethylammonium hydroxide (TEACH), results in a polymer that comprises a large amount of decarboxylated end groups.

### Experiment B:

20 g of 2,5-furandicarboxylic acid were mixed with ethylene glycol in the molar ratio indicated below. Unless otherwise noted, the suppressant was added in an amount as indicated in Table 3 before the composition was subjected for 210 min to a temperature of 220°C. After esterification the polycondensation catalyst was added. Polycondensation was conducted for 75 min at 260°C. The type and amount of polycondensation catalyst and suppressant are indicated in Table 3 and the results obtained for the polymer after melt polymerization, i.e. after polycondensation, are listed in Table 4.

**Table 3**

| | Molar ratio | Catalyst | Catalyst (ppm metal) | Suppressant | Suppressant (ppm) |
|---|---|---|---|---|---|
| Comp 6 | 1.15 | Al | 30 | KOH | 80 |
| Comp 7 | 1.15 | Al | 30 | NaH₂PO₄ | 171 |
| Comp 8 | 1.15 | Al | 30 | Na₂HPO₄ | 203 |
| Comp 9 | 1.18 | Sb | 270 | TEAOH | 210 |
| Comp 10 | 1.18 | Sb | 270 | TEAOH | 210 |
| Comp 11^{b} | 1.17 | Sb | 250 | LiOH | 50 |
| Comp 12^{c} | 1.17 | Sb | 250 | LiOH | 50 |
| Comp 13 | 1.18 | Sb | 250 | Et₂NEtOH | 167 |
| Comp 14 | 1.18 | Sb | 250 | NaH₂PO₄ | 171 |
| Comp 15 | 1.18 | Sb | 250 | Na₂HPO₄ | 203 |
| Comp 16 | 1.18 | Sb | 250 | Na₂HPO₄ | 203 |
| Comp 17 | 1.18 | Sb | 250 | Me2NDodec | 305 |
| Comp 18 | 1.18 | Sb | 250 | ACAEBD | 366 |
| Ex.1 | 1.15 | Ge | 400 | LiOH | 50 |
| Ex.2^{b} | 1.20 | Ge | 200 | LiOH | 50 |
| Ex.3^{b} | 1.18 | Ge | 400 | Et₂NEtOH | 167 |
| Ex.4^{b,d} | 1.20 | Ge | 400 | Et₂NEtOH | 167 |
| Ex.5^{a,b} | 1.22 | Ge | 400 | Et₂NEtOH | 167 |
| Ex.6^{a,b} | 1.22 | Ge | 400 | Me₂NDodec | 305 |
| Ex.7^{a,b} | 1.22 | Ge | 400 | ACAEBD | 366 |
| Comp 19^{a,b} | 1.22 | Ge | 200 | NaH₂PO₄ | 171 |
| Comp 20^{a,b} | 1.22 | Ge | 200 | Na₂HPO₄ | 203 |
| Comp 21^{a} | 1.21 | Ge | 200 | Na₂HPO₄ | 203 |

| | | | | | |
|---|---|---|---|---|---|
| a) the polycondensation was conducted at 265 °C b) 15 ppm of H₃PO₄ was added as a stabilizer after esterification c) the esterification lasted only 180 min d) the polycondensation was conducted at 270 °C | | | | | |

**Table 4**

| | DEC (eq/t) | CEG (eq/t) | HEG (eq/t) | cDEG (wt%) | A_400 (a.u.) | Mₙ (kg/mol) | M_{W} (kg/mol) |
|---|---|---|---|---|---|---|---|
| Comp 6 | 10 | 27 | 107 | 2.0 | 0.017 | 25.5 | 55.9 |
| Comp 7 | 8 | 91 | 264 | 2.1 | 0.011 | 13.0 | 24.6 |
| Comp 8 | 13 | 58 | 341 | 1.9 | 0.014 | 12.0 | 22.4 |
| Comp 9 | 11 | 56 | 75 | 2.1 | 0.015 | 25.7 | 58.0 |
| Comp 10 | 8 | 66 | 68 | 2.1 | 0.012 | 27.5 | 58.3 |
| Comp 11 | 7 | 63 | 72 | 2.2 | 0.020 | 26.1 | 55.8 |
| Comp 12 | 7 | 68 | 73 | 2.1 | 0.015 | 25.3 | 54.0 |
| Comp 13 | 7 | 44 | 66 | 2.2 | 0.017 | 30.1 | 67.1 |
| Comp 14 | 9 | 41 | 63 | 2.3 | 0.021 | 30.9 | 69.1 |
| Comp 15 | 10 | 271 | 16 | 2.0 | 0.035 | - | - |
| Comp 16 | 11 | 50 | 47 | 2.2 | 0.021 | 31.9 | 71.7 |
| Comp 17 | 7 | 44 | 71 | 1.9 | 0.019 | 29.0 | 64.5 |
| Comp 18 | 7 | 42 | 69 | 2.1 | 0.029 | - | - |
| Ex.1 | 4 | 89 | 44 | 2.1 | 0.015 | 26.6 | 58.4 |
| Ex.2 | 4 | 50 | 110 | 2.1 | 0.010 | 24.0 | 49.2 |
| Ex.3 | 4 | 102 | 86 | 2.1 | 0.009 | 21.4 | 44.0 |
| Ex.4 | 5 | 85 | 67 | 2.1 | 0.021 | 26.3 | 56.0 |
| Ex.5 | 5 | 62 | 117 | 2.2 | 0.015 | 23.3 | 47.9 |
| Ex.6 | 4 | 46 | 135 | 2.1 | 0.012 | 22.6 | 47.4 |
| Ex.7 | 4 | 95 | 79 | 1.8 | 0.023 | 23.5 | 50.0 |
| Comp 19 | 7 | 49 | 127 | 2.8 | 0.017 | 23.0 | 48.0 |
| Comp 20 | 12 | 20 | 134 | 2.2 | 0.020 | 24.8 | 52.4 |
| Comp 21 | 12 | 34 | 114 | 2.3 | 0.020 | 24.8 | 52.5 |

The results of the experiments are summarized in Tables 3 and 4. Comparative experiments Comp 6 to Comp 18 all employ a non-germanium polycondensation catalyst with typical suppressants like sodium dihydrogen phosphate, disodium hydrogen phosphate, tetraethylammonium hydroxide as well as with the specific suppressants of the present invention, i.e. amines and lithium hydroxide. The polyesters obtained exhibit significant decarboxylation, namely 7 eq/t or more.

The experiments according to the invention Ex.1 to Ex.7 employ the polycondensation catalyst and suppressant of the present invention. The polyesters obtained have a decarboxylation of 4 to 5 eq/t.

As a beneficial side effect, it is possible to obtain good molecular weights and good optical properties as indicated by the A_400 values. In particular, it is noted that significantly lower A_400 values are obtained if the amines Et₂NEtOH or Me₂NDodec are combined with the germanium compound.

The resins obtained after polycondensation as described above where crystallized at atmospheric pressure under air or nitrogen atmosphere at a temperature of 150 °C before being subjected to solid state polymerization for 24 h at reduced pressure under nitrogen atmosphere at a temperature of 200 °C. The average diameter of the particles subjected to solid state polymerization was 1.4 to 2.0 mm. The results are summarized in Table 5.

**Table 5**

| | A_400 (a.u.) Air | A_400 (a.u.) N2 | Mₙ (kg/mol) | M_{w} (kg/mol) |
|---|---|---|---|---|
| Comp 6 | 0.048 | - | 46.0 | 112.4 |
| Comp 9 | 0.051 | - | 47.6 | 127.1 |
| Comp 10 | 0.046 | - | 49.0 | 119.6 |
| Comp 11 | 0.045 | - | 55.0 | 131.7 |
| Comp 12 | 0.042 | - | 56.5 | 145.4 |
| Comp 13 | - | 0.026 | 58.6 | 141.5 |
| Comp 14 | - | 0.029 | 67.9 | 162.9 |
| Comp 16 | - | 0.028 | 66.0 | 135.1 |
| Comp 17 | - | 0.033 | 63.1 | 147.6 |
| Comp 18 | - | 0.053 | 63.3 | 153.0 |
| Ex.2 | 0.058 | - | 51.5 | 140.5 |
| Ex.5 | 0.048 | 0.018 | 39.5 | 88.2 |
| Ex.6 | 0.052 | 0.019 | 36.3 | 79.8 |
| Ex.7 | 0.094 | 0.043 | 43.6 | 90.2 |
| Comp 19 | 0.094 | 0.025 | 47.5 | 108.3 |
| Comp 20 | 0.065 | 0.040 | 41.8 | 85.5 |
| Comp 21 | - | 0.024 | 44.6 | 94.1 |

The data show that similar molecular weights can be obtained with the process of the present invention compared to the prior art processes.

The optical properties, as represented by the A_400 value can be enhanced if the crystallization is conducted in an atmosphere with reduced oxygen concentration, e.g. under an inert gas atmosphere.

### Experiment C:

Scale-up experiments were conducted, using either 1.5 kg or 30 kg of a starting composition comprising ethylene glycol and 2,5-furandicarboxylic acid. The suppressant was added in an amount corresponding to 0.026 mol% with respect to the amount of 2,5-furandicarboxylic acid before the composition was subjected to esterification conditions. In the obtained ester composition of Comp 24 and Ex.9, the ratio of hydroxyl end groups measured by ¹H-NMR to carboxylic acid end groups measured by titration were 1161 eq/t to 954 eq/t and 1398 eq/t to 816 eq/t, respectively. After esterification the polycondensation catalyst was added as metal oxide in 0.65 mL ethylene glycol. The type and amount of polycondensation catalyst and suppressant are indicated in Table 6, the process parameters are disclosed in Table 7. The results obtained for the polymer after melt polymerization are listed in Table 8.

**Table 6**

| | Molar ratio | Catalyst | Catalyst conc. (ppm metal) | Suppressant | Suppressant (ppm) |
|---|---|---|---|---|---|
| Comp 22 | 1.19 | Sb | 320 | TEACH | 210 |
| Comp 23^{b} | 1.18 | Ge | 200 | TEAOH | 210 |
| Ex.8^{b} | 1.18 | Ge | 200 | Et₂NEtOH | 167 |
| Comp 24 | 1.10 | Sb | 250 | TEAOH | 200 |
| Ex.9^{b} | 1.13 | Ge | 200 | LiOH | 50 |
| Comp 25^{b} | 1.13 | Ge | 200 | TEAOH | 200 |

| | | | | | |
|---|---|---|---|---|---|
| b) 15 ppm of H₃PO₄ was added as a stabilizer after esterification | | | | | |

**Table 7**

| | | Esterification | | Polycondensation | |
|---|---|---|---|---|---|
| | Sample weight (kg) | Temp (°C) | Time (min) | Temp (°C) | Time (min) |
| Comp 22 | 1.5 | 220 | 210 | 260 | 88 |
| Comp 23^{b} | 1.5 | 220 | 210 | 260 | 178 |
| Ex.8^{b} | 1.5 | 220 | 210 | 265 | 148 |
| Comp 24 | 30 | 220 | 245 | 255 | 180 |
| Ex.9^{b} | 30 | 220 | 230 | 265 | 103 |
| Comp 25^{b} | 30 | 220 | 230 | 265 | 195 |

**Table 8**

| | DEC (eq/t) | CEG (eq/t) | HEG (eq/t) | cDEG (wt%) | A_400 (a.u.) | Mₙ (kg/mol) | M_{w} /kg/mol) |
|---|---|---|---|---|---|---|---|
| Comp 22 | 10 | 33 | 73 | 2.3 | 0.020 | 31.5 | 71.2 |
| Comp 23^{b} | 7 | 51 | 75 | 2.4 | 0.011 | 28.8 | 64.0 |
| Ex.8^{b} | 5 | 45 | 68 | 2.6 | 0.013 | 29.3 | 67.1 |
| Comp 24 | 12 | 57 | 49 | 2.0 | 0.026 | 29.3 | 67.6 |
| Ex.9^{b} | 5 | 39 | 70 | 2.3 | - | 30.2 | 68.0 |
| Comp 25^{b} | 13 | 52 | 47 | 2.0 | - | 31.5 | 71.0 |

The results of the experiments summarized above show that polyesters with reduced amounts of decarboxylated end groups can be obtained by the process of the present invention. Low decarboxylation is observed for the specific combination of catalyst and suppressant according to the present invention besides good optical properties and comparable molecular weights.

The resins obtained as described above were crystallized at atmospheric pressure under air or nitrogen atmosphere at a temperature 150 °C before being subjected to solid state polymerization for 24 h at reduced pressure under nitrogen atmosphere at a temperature of 200 °C. The average diameter of the particles subjected to solid state polymerization was 1.4 to 2.0 mm. The results are summarized in Table 9.

**Table 9**

| | A_400 (a.u.) | A_400 (a.u.) | Mₙ (kg/mol) | M_{w} (kg/mol) |
|---|---|---|---|---|
| | Air | N2 | | |
| Comp 22 | 0.040 | 0.026 | 59.5 | 144.3 |
| Comp 23^{b} | 0.063 | 0.013 | 47.8 | 98.6 |
| Ex.8^{b} | - | 0.023 | 58.3 | 112.3 |
| Comp 24 | 0.077 | 0.046 | 50.7 | 124.3 |
| Ex.9^{b} | 0.113 | 0.049 | 70.5 | 181.6 |
| Comp 25^{b} | - | - | 56.1 | 117.4 |

Ex.8 and Ex.9 show that particular good molecular weights are obtained after only 24 hours of solid-state polymerization for the experiments.

Furthermore, the experimental data in Table 9 show that the optical properties of the polyesters can be improved if crystallization is conducted in an atmosphere with reduced oxygen concentration, e.g. under an inert gas atmosphere. Furthermore, these experiments confirm that the use of lithium hydroxide as a suppressant in combination with a germanium containing catalyst allows for a pronounced increase in molecular weight increase during solid-state polymerization.

Almost the same molecular weights are obtained after polycondensation for Ex.9 and Comp 25 although the polycondensation for experiment Ex.9 was only conducted for about half of the time that was used for Comp 25. After 24 h of solid state polymerization, the resin obtained in Ex.9 exhibits a relative increase of about +167 % in M_{w}, whereas the comparative example Comp 25 only exhibits a relative increase of about +65 %.

## Claims

1. Process for producing a polyester comprising 2,5-furandicarboxylate units, which process comprises:
a) providing or producing a starting composition comprising 2,5-furandicarboxylic acid, an aliphatic diol and a suppressant for suppressing ether formation between the aliphatic diol molecules,
b) subjecting the starting composition to esterification conditions to produce an ester composition, and
c) contacting the ester composition with a germanium containing catalyst at polycondensation conditions to produce a polyester comprising 2,5-furandicarboxylate units, wherein the suppressant is selected from the group consisting of amines and lithium hydroxide.

2. Process according to claim 1, wherein the aliphatic diol comprises 2 to 8 carbon atoms.

3. Process according to any one of claims 1 or 2, wherein the molar ratio of the aliphatic diol to 2,5-furandicarboxylic acid of the starting composition is in the range of 1.01 to 1.80.

4. Process according to any one of claims 1 to 3, wherein the esterification conditions comprise a temperature in the range of 180 to 260 °C and wherein the polycondensation conditions comprise a temperature in the range of 240 to 300 °C.

5. Process according to any one of claims 1 to 4, wherein the starting composition is subjected to esterification conditions in the presence of the germanium containing catalyst.

6. Process according to any one of claims 1 to 5, wherein the germanium containing catalyst is added to the esterification and/or polycondensation as a germanium salt, preferably an organic germanium salt or germanium oxide or a mixture thereof.

7. Process according to any one of claims 1 to 6, wherein the suppressant is selected from the group consisting of primary amines, tertiary amines and lithium hydroxide, more preferably selected from the group consisting of 2-(diethylamino)ethanol, N,N-dimethyldodecylamine, 3-aminocrotonic acid ester with butanediol and lithium hydroxide.

8. Process according to any one of claims 1 to 7, wherein the amount of decarboxylated end groups in the polyester comprising 2,5-furandicarboxylate units after polycondensation determined by ¹H-NMR is less than 7 eq/t, preferably less than 6 eq/t, most preferably less than 5 eq/t.

9. Process according to any one of claims 1 to 8, further comprising the steps:
d) crystallizing the polyester comprising 2,5-furandicarboxylate units obtained in step c) to obtain a crystallized polyester comprising 2,5-furandicarboxylate units, and
e) subjecting the crystallized polyester comprising 2,5-furandicarboxylate units produced in step d) to a solid state polymerization for increasing the molecular weight.

10. Process according to claim 9, wherein the solid state polymerization is conducted at an elevated temperature in the range of Tm - 80 °C to Tm - 20 °C, wherein Tm is the melting point of the polyester comprising 2,5-furandicarboxylate units in °C determined in accordance with ISO11357-3.

11. Process according to any one of claims 9 or 10, wherein the crystallization is conducted in an atmosphere with reduced oxygen concentration, preferably under inert gas atmosphere.

12. Catalyst system for use in a process according to any one of claims 1 to 11, comprising a germanium compound, preferably germanium oxide, as a polycondensation catalyst and one or more suppressants, selected from the group consisting of 2-(diethylamino)ethanol, N,N-dimethyldodecylamine, 3-aminocrotonic acid ester with butanediol and lithium hydroxide.

13. Use of a catalyst system according to claim 12 in a process according to any one of claims 1 to 11.

14. Polyester comprising 2,5-furandicarboxylate units having a weight average molecular weight after polycondensation of 40 kg/mol or more, determined by gel permeation chromatography with hexafluorisopropanol and 0.05 M potassiumtrifluoroacetate as eluent and calibrated using polymethylmethacrylate standard, wherein the amount of decarboxylated end groups in the polyester is less than 7 eq/t as determined by ¹H-NMR using TCE-d2.

## Patentansprüche

1. Verfahren zum Herstellen eines Polyesters, der 2,5-Furandicarboxylat-Einheiten umfasst, wobei das Verfahren Folgendes umfasst:
a) Bereitstellen oder Herstellen einer Ausgangszusammensetzung, die 2,5-Furandicarbonsäure, ein aliphatisches Diol und einen Unterdrücker zum Unterdrücken der Etherbildung zwischen den aliphatischen Diolmolekülen umfasst,
b) Aussetzen der Ausgangszusammensetzung gegenüber Veresterungsbedingungen, um eine Esterzusammensetzung herzustellen, und
c) Inkontaktbringen der Esterzusammensetzung mit einem Germanium enthaltenden Katalysator bei Polykondensationsbedingungen, um einen Polyester herzustellen, der 2,5-Furandicarboxylat-Einheiten umfasst, wobei der Unterdrücker ausgewählt ist aus der Gruppe bestehend aus Aminen und Lithiumhydroxid.

2. Verfahren nach Anspruch 1, wobei das aliphatische Diol 2 bis 8 Kohlenstoffatome umfasst.

3. Verfahren nach einem der Ansprüche 1 oder 2, wobei das Molverhältnis des aliphatischen Diols zu 2,5-Furandicarbonsäure der Ausgangszusammensetzung im Bereich von 1,01 bis 1,80 liegt.

4. Verfahren nach einem der Ansprüche 1 bis 3, wobei die Veresterungsbedingungen eine Temperatur im Bereich von 180 bis 260 °C umfassen und wobei die Polykondensationsbedingungen eine Temperatur im Bereich von 240 bis 300 °C umfassen.

5. Verfahren nach einem der Ansprüche 1 bis 4, wobei die Ausgangszusammensetzung Veresterungsbedingungen in Gegenwart des Germanium enthaltenden Katalysators ausgesetzt wird.

6. Verfahren nach einem der Ansprüche 1 bis 5, wobei der Germanium enthaltende Katalysator der Veresterung und/oder Polykondensation als Germaniumsalz, vorzugsweise als organisches Germaniumsalz oder Germaniumoxid oder Gemisch davon, zugesetzt wird.

7. Verfahren nach einem der Ansprüche 1 bis 6, wobei der Unterdrücker ausgewählt ist aus der Gruppe bestehend aus primären Aminen, tertiären Aminen und Lithiumhydroxid, besonders bevorzugt ausgewählt aus der Gruppe bestehend aus 2-(Diethylamino)ethanol, N,N-Dimethyldodecylamin, 3-Aminocrotonsäureester mit Butandiol und Lithiumhydroxid.

8. Verfahren nach einem der Ansprüche 1 bis 7, wobei die Menge an decarboxylierten Endgruppen in dem Polyester 2,5-Furandicarboxylat-Einheiten nach Polykondensation, bestimmt mittels ¹H-NMR, weniger als 7 Äq/t, vorzugsweise weniger als 6 Äq/t, ganz besonders bevorzugt weniger als 5 Äq/t, beträgt.

9. Verfahren nach einem der Ansprüche 1 bis 8, ferner umfassend die folgenden Schritte:
d) Kristallisieren des in Schritt c) erhaltenen Polyesters, der 2,5-Furandicarboxylat-Einheiten umfasst, um einen kristallisierten Polyester, der 2,5-Furandicarboxylat-Einheiten umfasst, zu erhalten, und
e) Aussetzen des in Schritt d) hergestellten kristallisierten Polyesters, der 2,5-Furandicarboxylat-Einheiten umfasst, gegenüber einer Festkörperpolymerisation zum Erhöhen des Molekulargewichts.

10. Verfahren nach Anspruch 9, wobei die Festkörperpolymerisation bei einer erhöhten Temperatur im Bereich von Tm - 80 °C bis Tm - 20 °C durchgeführt wird, wobei Tm der Schmelzpunkt des Polyesters, der 2,5-Furandicarboxylat-Einheiten umfasst, in °C, bestimmt gemäß ISO11357-3, ist.

11. Verfahren nach einem der Ansprüche 9 oder 10, wobei die Kristallisation in einer Atmosphäre mit reduzierter Sauerstoffkonzentration, vorzugsweise unter Inertgasatmosphäre, durchgeführt wird.

12. Katalysatorsystem zur Verwendung in einem Verfahren nach einem der Ansprüche 1 bis 11, umfassend eine Germaniumverbindung, vorzugsweise Germaniumoxid, als Polykondensationskatalysator und einen oder mehrere Unterdrücker, die ausgewählt sind aus der Gruppe bestehend aus 2-(Diethylamino)ethanol, N,N-Dimethyldodecylamin, 3-Aminocrotonsäureester mit Butandiol und Lithiumhydroxid.

13. Verwendung eines Katalysatorsystems nach Anspruch 12 in einem Verfahren nach einem der Ansprüche 1 bis 11.

14. Polyester, umfassend 2,5-Furandicarboxylat-Einheiten mit einem gewichtsmittleren Molekulargewicht nach Polykondensation von 40 kg/mol oder mehr, bestimmt mittels Gelpermeationschromatographie mit Hexafluorisopropanol und 0,05 M Kaliumtrifluoracetat als Elutionsmittel und kalibriert unter Verwendung des Polymethylmethacrylat-Standards, wobei die Menge an decarboxylierten Endgruppen in dem Polyester weniger als 7 Äq/t, wie mittels ¹H-NMR unter Verwendung von TCE-d2 bestimmt, beträgt.

## Revendications

1. Procédé de production d'un polyester comprenant des motifs 2,5-furanedicarboxylate, ledit procédé comprenant :
a) la fourniture ou la production d'une composition de départ comprenant de l'acide 2,5-furanedicarboxylique, un diol aliphatique et un suppresseur pour supprimer la formation d'éther entre les molécules de diol aliphatique,
b) la soumission de la composition de départ à des conditions d'estérification pour produire une composition d'ester, et
c) la mise en contact de la composition d'ester avec un catalyseur contenant du germanium à des conditions de polycondensation pour produire un polyester comprenant des motifs 2,5-furanedicarboxylate, dans lequel le suppresseur est choisi dans le groupe constitué d'amines et de l'hydroxyde de lithium.

2. Procédé selon la revendication 1, dans lequel le diol aliphatique comprend 2 à 8 atomes de carbone.

3. Procédé selon l'une quelconque des revendications 1 ou 2, dans lequel le rapport molaire du diol aliphatique à l'acide 2,5-furanedicarboxylique de la composition de départ est dans la plage de 1,01 à 1,80.

4. Procédé selon l'une quelconque des revendications 1 à 3, dans lequel les conditions d'estérification comprennent une température dans la plage de 180 à 260 °C et dans lequel les conditions de polycondensation comprennent une température dans la plage de 240 à 300 °C.

5. Procédé selon l'une quelconque des revendications 1 à 4, dans lequel la composition de départ est soumise à des conditions d'estérification en présence du catalyseur contenant du germanium.

6. Procédé selon l'une quelconque des revendications 1 à 5, dans lequel le catalyseur contenant du germanium est ajouté à l'estérification et/ou à la polycondensation sous la forme d'un sel de germanium, de préférence un sel de germanium organique ou de l'oxyde de germanium ou un mélange de ceux-ci.

7. Procédé selon l'une quelconque des revendications 1 à 6, dans lequel le suppresseur est choisi dans le groupe constitué d'amines primaires, d'amines tertiaires et de l'hydroxyde de lithium, plus préférablement choisi dans le groupe constitué du 2-(diéthylamino)éthanol, de la N,N-diméthyldodécylamine, de l'ester d'acide 3-aminocrotonique avec le butanediol et de l'hydroxyde de lithium.

8. Procédé selon l'une quelconque des revendications 1 à 7, dans lequel la quantité de groupes terminaux décarboxylés dans le polyester comprenant des motifs 2,5-furanedicarboxylate après polycondensation déterminée par RMN-¹H est inférieure à 7 eq/t, de préférence inférieure à 6 eq/t, de manière préférée entre toutes inférieure à 5 eq/t.

9. Procédé selon l'une quelconque des revendications 1 à 8, comprenant en outre les étapes de :
d) cristallisation du polyester comprenant des motifs 2,5-furanedicarboxylate obtenu dans l'étape c) pour obtenir un polyester cristallisé comprenant des motifs 2,5-furanedicarboxylate, et
e) soumission du polyester cristallisé comprenant des motifs 2,5-furanedicarboxylate produits dans l'étape d) à une polymérisation à l'état solide pour augmenter le poids moléculaire.

10. Procédé selon la revendication 9, dans lequel la polymérisation à l'état solide est conduite à une température élevée dans la plage de Tm - 80 °C à Tm - 20 °C, Tm étant le point de fusion du polyester comprenant des motifs 2,5-furanedicarboxylate en °C déterminé selon ISO11357-3.

11. Procédé selon l'une quelconque des revendications 9 ou 10, dans lequel la cristallisation est conduite dans une atmosphère avec une concentration d'oxygène réduite, de préférence sous une atmosphère de gaz inerte.

12. Système de catalyseur pour utilisation dans un procédé selon l'une quelconque des revendications 1 à 11, comprenant un composé de germanium, de préférence l'oxyde de germanium, en tant que catalyseur de polycondensation et un ou plusieurs suppresseurs, choisis dans le groupe constitué du 2-(diéthylamino)éthanol, de la N,N-diméthyldodécylamine, de l'ester d'acide 3-aminocrotonique avec le butanediol et de l'hydroxyde de lithium.

13. Utilisation d'un système de catalyseur selon la revendication 12 dans un procédé selon l'une quelconque des revendications 1 à 11.

14. Polyester comprenant des motifs 2,5-furanedicarboxylate ayant un poids moléculaire moyen en poids après polycondensation de 40 kg/mol ou plus, déterminé par chromatographie par perméation de gel avec de l'hexafluorisopropanol et du trifluoroacétate de potassium 0,05 M en tant qu'éluant et étalonné au moyen d'un étalon de poly(méthacrylate de méthyle), dans lequel la quantité de groupes terminaux décarboxylés dans le polyester est inférieure à 7 eq/t comme déterminé par RMN-¹H en utilisant TCE-d2.
